# EUROPÄISCHE PATENTSCHRIFT

(11) **EP 2 393 679 B1**
(45) Veröffentlichungstag und Bekanntmachung des Hinweises auf die Patenterteilung: **21.11.2012**
(21) Anmeldenummer: 10704320.0
(22) Anmeldetag: 03.02.2010
(51) Int. Cl.: B60G 17/033, B60G 17/052, B60G 21/073

(54) **NIVEAUREGELVENTIL MIT JE EINEM ANSCHLUSS FÜR LUFTFEDERBÄLGE DER RECHTEN UND DER LINKEN SEITE**
LEVELING VALVE HAVING ONE CONNECTION EACH FOR AIR-SPRING BELLOWS ON THE RIGHT AND LEFT SIDE
CORRECTEUR D'ASSIETTE DOTE D'UN RACCORDEMENT POUR LES SOUFFLETS A AIR DE LA SUSPENSION PNEUMATIQUE RESPECTIVEMENT COTE DROIT ET COTE GAUCHE

(30) Priorität: 05.02.2009 DE 102009007674
(43) Veröffentlichungstag der Anmeldung: 14.12.2011
(73) Patentinhaber: KNORR-BREMSE Systeme für Nutzfahrzeuge GmbH, 80809 München (DE)
(72) Erfinder: VOITH, András, H-1183 Budapest (HU); TÓTH, Janos, H-6000 Kecskemét (HU); KÁNTOR, Kornél, H-6000 Kecskemét (HU); MUSER, Michael, 85276 Pfaffenhofen (DE); FAZEKAS, Csaba, H-1213 Budapest (HU)
(74) Vertreter: Schönmann, Kurt
(86) Internationale Anmeldenummer: PCT/EP2010/000641
(87) Internationale Veröffentlichungsnummer: WO 2010/089088

(56) Entgegenhaltungen:
- EP-A1- 0 556 086
- EP-B1- 0 255 412
- DE-B- 1 144 125
- FR-A1- 2 576 555
- US-A- 2 998 243
- US-A- 4 497 505
- US-B1- 6 202 992

## Beschreibung

Die Erfindung geht aus von einem Niveauregelventil für eine Luftfederungseinrichtung zur Niveauregelung des Fahrzeugaufbaus von luftgefederten Fahrzeugen, gemäß dem Oberbegriff von Anspruch 1.

Ein Niveauregelventil als Bestandteil einer Luftfederungseinrichtung ist aus der DE 693 03 635 T2 bekannt. Solche werden meist für schwere Nutzfahrzeuge verwendet, da diese bereits über eine Druckluftquelle für die Versorgung pneumatischer Bremsen verfügen. Bei der bekannten Luftfederungseinrichtung wird das Niveauregelventil durch den Fahrzeugaufbau dadurch gesteuert, dass der Fahrzeugaufbau über einen Hebel mit einem der Ventilkörper verbunden ist, wobei der Hebel bei Beladung des Fahrzeugaufbaus den einen Ventilkörper gegenüber dem anderen Ventilkörper verdreht, wodurch ein mit einer Druckluftquelle in Verbindung stehender Strömungskanal in dem einen Ventilkörper in Überdeckung mit einem mit den Luftfederbälgen in Verbindung stehenden Strömungskanal in dem anderen Ventilkörper gerät und so die Luftfederbälge belüftet werden, bis der Hebel den einen Ventilkörper derart verstellt, dass die Strömungsverbindung unterbrochen und das vor der Beladung vorhandene Niveau des Fahrzeugaufbaus wieder hergestellt wird. Analog wird bei einer Entlastung des Fahrzeugaufbaus der Hebel zusammen mit dem einen Ventilkörper in eine Richtung verstellt, in welcher ein mit einer Drucksenke in Verbindung stehender Strömungskanal in dem einen Ventilkörper in Überdeckung mit einem mit den Luftfederbälgen in Verbindung stehenden Strömungskanal in dem anderen Ventilkörper gerät und so die Luftfederbälge entlüftet werden bis die vor der Entlastung vorhandene Niveaulage des Fahrzeugaufbaus wieder erreicht ist.

Mit Hilfe des Niveauregelventils wird daher die Niveaulage des Aufbaus unabhängig von der Beladung konstant gehalten. Das bekannte Niveauregelventil verfügt über einen einzigen Anschluss für die Luftfederbälge der rechten Fahrzeugseite und für die Luftfederbälge der linken Fahrzeugseite. Damit kann aber nur ein einkreisiges System verwirklicht werden, bei welchem die Luftfederbälge der rechten Seite und der linken Seite gleichzeitig be- bzw. entlüftet werden. Bei sog. zweikreisigen Systemen sind die Luftfederbälge der rechten Fahrzeugseite und der linken Fahrzeugseite quasi unabhängig voneinander be- bzw. entlüftbar. Dies hat den Vorteil, dass große Wankbewegungen des Fahrzeugaufbaus beispielsweise bei Kurvenfahrt durch eine entsprechende Be- bzw. Entlüftung der kurvenäußeren Luftfederbälge bzw. der kurveninneren Luftfederbälge ausgeglichen werden können.

In US-A-2998243 wird ein Niveauregelventil für das linke und rechte Federungselement einer hydropneumatischen Federungseinrichtung beschrieben, wobei in den relativ zueinander beweglichen Ventilkörpern für jedes Federelement gesonderte in die Kontaktflächen mündende Strömungswege ausgebildet sind, und wobei zwei Strömungswege gesondert zu Anschlüssen der Federelemente führen und diese Strömungswege durch einen Kanal verbunden sind. In EP-B-255412 werden zwei durch eine gedrosselte Verbindung verbundene hydropneumatische Federelemente gezeigt, wobei diese Verbindung durch einen Schieber gesperrt werden kann. DE 1 144 125 B beschreibt ein Niveauregelventil mit zwei getrennten Balganschlüssen. Ein gattungsgemäßes Niveauregelventil ist aus US-B-6202992 bekannt.

Der vorliegenden Erfindung liegt daher demgegenüber die Aufgabe zugrunde, ein Niveauregelventil der eingangs erwähnten Art derart weiter zu entwickeln, dass es sowohl für einkreisige als auch für zweikreisige Luftfederungseinrichtungen verwendbar ist, ohne dass aufwändige Umbauten vorgenommen werden müssen.

Diese Aufgabe wird erfindungsgemäß durch die Merkmale von Anspruch 1 gelöst.

### Offenbarung der Erfindung

Es wird vorgeschlagen, dass das Ventilgehäuse des Niveauregelventils wenigstens einen Luftfederbalg-Anschluss für wenigstens einen Luftfederbalg der rechten Seite und wenigstens einen weiteren Luftfederbalg-Anschluss für wenigstens einen Luftfederbalg der linken Seite des Fahrzeugs sowie einen Verbindungskanal zwischen den beiden Luftfederbalg-Anschlüssen aufweist, in welchem wahlweise wenigstens ein Einsatzkörper in Form einer den Strömungsquerschnitt zwischen dem einen Luftfederbalg-Anschluss und dem weiteren Luftfederbalg-Anschluss verengenden Drossel oder in Form eines Sperrelements zum Sperren des Strömungsquerschnitts lösbar befestigt ist.

Falls eine Drossel in dem Verbindungskanal angeordnet wird, können Wankbewegungen des Fahrzeugaufbaus ausgeglichen werden, indem die Drossel eine Druckluftströmung von den Luftfederbälgen der höher belasteten Kurvenaußenseite zu den Luftfederbälgen der niedriger belasteten Kurveninnenseite nur eingeschränkt, genauer erst nach einer gewissen Zeit zulässt. Dadurch bleibt der Druck und damit die Federrate in den Luftfederbälgen der Kurvenaußenseite wenigstens für eine gewisse Zeitdauer hoch, was zu einer niedrigeren Einfederung an der Kurvenaußenseite und letztlich zu einer geringeren Wankbewegung führt. Auf diese Weise wird ein quasi-zweikreisiges System verwirklicht, bei welchem der Kreis der Luftfederbälge der rechten Fahrzeugseite und der Kreis der Luftfederbälge der linken Fahrzeugseite voneinander quasi entkoppelt sind.

Falls in dem Verbindungskanal ein Sperrelement zum Sperren einer Strömung zwischen dem einen Luftfederbalg-Anschluss und dem weiteren Luftfederbalg-Anschluss lösbar montiert wird, können die Luftfederbälge der rechten Fahrzeugseite und der linken Fahrzeugseite über die beiden nun strömungstechnisch völlig getrennten Luftfederbalg-Anschlüsse unabhängig voneinander be- bzw. entlüftet werden.

Nicht zuletzt kann auch auf den Einsatzkörper im Verbindungskanal völlig verzichtet werden, d.h. es wird kein Einsatzkörper in den Verbindungskanal eingesetzt, so dass eine ungehinderte Strömung zwischen den Luftfederbälgen der rechten Fahrzeugseite und der linken Fahrzeugseite möglich ist.

Damit weist ist das erfindungsgemäße Niveauregelventil universell für einkreisike und zweikreisige Luftfederungseinrichtungen einsetzbar, wobei sich die Umrüstung auf das jeweilige System auf das Auswechseln des Einsatzkörpers bzw. dessen Weglassen beschränkt, weshalb das Niveauregelventil sehr günstig herstellbar ist.

Durch die in den Unteransprüchen aufgeführten Maßnahmen sind vorteilhafte Weiterbildungen und Verbesserungen der in den unabhängigen Ansprüchen angegebenen Erfindung möglich.

Besonders bevorzugt weist der eine Ventilkörper als Strömungswege wenigstens einen Belüftungskanal, einen Entlüftungskanal sowie einen Strömungskanal für den wenigstens einen Luftfederbalg der rechten Seite und einen Strömungskanal für den Luftfederbalg der linken Seite aufweist, wobei der Belüftungskanal, der Entlüftungskanal sowie die Strömungskanäle für den wenigstens einen Luftfederbalg der rechten Seite und für den Luftfederbalg der linken Seite einerseits in die Kontaktfläche des einen Ventilkörpers mit dem anderen Ventilkörper münden und andererseits der Belüftungskanal mit einem Druckluftreservoir-Anschluss des Ventilgehäuses, der Entlüftungskanal mit einer Drucksenke des Ventilgehäuses und der Strömungskanal für den wenigstens einen Luftfederbalg der rechten Seite mit dem einen Luftfederbalg-Anschluss des Ventilgehäuses und der Strömungskanal für den wenigstens einen Luftfederbalg der linken Seite mit dem weiteren Luftfederbalg-Anschluss des Ventilgehäuses in Strömungsverbindung steht.

Besonders bevorzugt weist der andere Ventilkörper an seiner zu dem einen Ventilkörper weisenden Kontaktfläche wenigstens eine mit der Mündung des Strömungskanals für den wenigstens einen Luftfederbalg der rechten Seite in Strömungsverbindung stehende Ausnehmung sowie wenigstens eine mit der Mündung des Strömungskanals für den wenigstens einen Luftfederbalg der linken Seite in Strömungsverbindung stehende Ausnehmung auf, wobei der Überdeckungsgrad dieser Ausnehmungen mit der Mündung des Belüftungskanal oder mit der Mündung des Entlüftungskanals des einen Ventilkörpers von der Niveaulage des Fahrzeugaufbaus abhängt. Die Ausnehmungen des anderen Ventilkörpers sind dabei beispielsweise als parallel zur Kontaktfläche verlaufende Nuten ausgebildet, wobei der Begriff "Nute" beinhaltet, dass ein Nutgrund vorhanden ist, es sich bei diesen Nuten also nicht um Durchgangslöcher handelt.

Besonders bevorzugt sind die Ventilkörper als einander kontaktierende Ventilscheiben kreisförmigen Querschnitts mit im wesentlichem identischen Durchmesser in Bezug zu einer zentralen Achse ausgebildet. In diesem Fall sind die Nuten des anderen Ventilkörpers zweckmäßig als radial voneinander beabstandete, in Bezug zur zentralen Achse konzentrische Kreisbögen ausgebildet.

Gemäß einer Weiterbildung ist die andere Ventilscheibe abhängig von der Niveaulage des Fahrzeugaufbaus relativ zu der einen, im Ventilgehäuse drehfest gelagerten Ventilscheibe um die zentrale Achse drehbar. Dies kann beispielsweise durch einen Hebeltrieb, welcher vom Fahrzeugaufbau auf die eine Ventilscheibe wirkt, realisiert sein. Weiterhin kann die eine, in dem Ventilgehäuse drehfest gelagerte Ventilscheibe in Bezug zur zentralen Achse im Ventilgehäuse axial beweglich gelagert sein.

In diesem Fall begrenzt die eine, in dem Ventilgehäuse drehfest gelagerte und in Bezug zur zentralen Achse im Ventilgehäuse axial beweglich gelagerte Ventilscheibe wenigstens eine im Ventilgehäuse ausgebildete und unter Druck stehende Kammer derart, dass dieser Druck die eine Ventilscheibe gegen die andere Ventilscheibe presst. Dabei sind bevorzugt mehrere Kammern vorgesehen, von welchen eine Kammer mit dem Druckluftreservoir-Anschluss, eine Kammer mit dem einen Luftfederbalg-Anschluss und eine weitere Kammer mit dem weiteren Luftfederbalg-Anschluss des Ventilgehäuses in Strömungsverbindung steht. Diese Kammern sind dann mittels axial elastischer, sich einerseits an der einen Ventilscheibe und andererseits am Ventilgehäuse abstützenden Dichtungen gegeneinander abgedichtet. Da insbesondere der Druckluftreservoir-Anschluss und auch die Luftfederbalg-Anschlüsse wegen des auf den Luftfederbälgen lastenden Eigengewichts des Fahrzeugs in der Regel einen gegenüber der Atmosphäre höheren Druck aufweisen, ist in den Kammern stets ein Druck vorhanden, welcher die eine Ventilscheibe gegen die andere Ventilscheibe presst, um die Dichtigkeit der Strömungsverbindungen der Strömungswege senkrecht zu den Kontaktflächen zu gewährleisten. Weiterhin ist die Verteilung des die Anpresskraft erzeugenden Drucks auf mehrere Kammern von Vorteil, da dann weniger Gefahr einer Verkippung bzw. ungleichmäßigen Axialbelastung der einen Ventilscheibe besteht.

Gemäß einer Weiterbildung ist zudem in dem einen Ventilkörper jeweils achsensymmetrisch oder spiegelsymmetrisch ein weiterer Belüftungskanal, ein weiterer Entlüftungskanal sowie ein weiterer Strömungskanal für den wenigstens einen Luftfederbalg der rechten Seite und ein weiterer Strömungskanal für den Luftfederbalg der linken Seite derart ausgebildet ist, dass in einer um 180 Grad um die zentrale Achse verschwenkten Lage des anderen Ventilkörpers in Bezug zu dem einen Ventilkörper die Ausnehmung des anderen Ventilkörpers mit der Mündung des Strömungskanals für den wenigstens einen Luftfederbalg der rechten Seite sowie die weitere Ausnehmung mit der Mündung des Strömungskanals für den wenigstens einen Luftfederbalg der linken Seite in Strömungsverbindung steht und der Überdeckungsgrad dieser Ausnehmungen mit der Mündung des Belüftungskanals oder mit der Mündung des Entlüftungskanals des einen Ventilkörpers von der Niveaulage des Fahrzeugaufbaus abhängt.

Damit kann der andere Ventilkörper in Bezug zu dem einen Ventilkörper auch in einer um 180 Grad verdrehten Lage in das Ventilgehäuse eingebaut werden. Wenn beispielsweise der andere Ventilkörper mittels einer Hebelkinematik mit dem Fahrzeugaufbau in Verbindung steht und abhängig von der Niveaulage oder der Last des Fahrzeugsaufbaus gegenüber dem einen Ventilkörper verdreht wird, ergibt sich dann eine höhere Flexibilität bezüglich der Einbaulage des Niveauregelventils.

Die Erfindung betrifft auch eine Luftfederungseinrichtung zum Heben und Senken des Fahrzeugaufbaus von luftgefederten Fahrzeugen mit Niveauregelung beinhaltend wenigstens ein Niveauregelventil nach einem der vorhergehenden Ansprüche

Genaueres geht aus der folgenden Beschreibung eines Ausführungsbeispiels hervor.

### Zeichnung

Nachstehend ist ein Ausführungsbeispiel der Erfindung in der Zeichnung dargestellt und in der nachfolgenden Beschreibung näher erläutert. In der Zeichnung zeigt
- Fig.1: eine Schnittdarstellung eines Niveauregelventils einer Luftfederungseinrichtung eines Nutzfahrzeugs gemäß einer bevorzugten Ausführungsform der Erfindung;
- Fig.2: eine schematische Draufsicht auf das Niveauregelventil von Fig.1;
- Fig.2A: eine schematische Draufsicht auf das Niveauregelventil von Fig.1 in einer veränderten Einbaulage;
- Fig.3: eine schematisches Schnittbild des Niveauregelventils von Fig.1 mit einer Drossel als Einsatzkörper;
- Fig.4: eine schematisches Schnittbild des Niveauregelventils von Fig.1 ohne Einsatzkörper;
- Fig.5: ein schematisches Schaltbild einer Luftfederungseinrichtung eines Nutzfahrzeugs mit dem Niveauregelventil von Fig.3;
- Fig.6: ein schematisches Schaltbild einer Luftfederungseinrichtung eines Nutzfahrzeugs mit dem Niveauregelventil von Fig.4;
- Fig.7: eine schematische Ansicht eines Nutzfahrzeugs in Kurvenfahrt mit einer Drossel in einem Verbindungskanal zwischen den Luftfederbälgen der rechten und der linken Fahrzeugseite;
- Fig.8: eine schematische Ansicht eines Nutzfahrzeugs in Kurvenfahrt ohne Drossel in dem Verbindungskanal zwischen den Luftfederbälgen der rechten und der linken Fahrzeugseite.

### Beschreibung des Ausführungsbeispiels

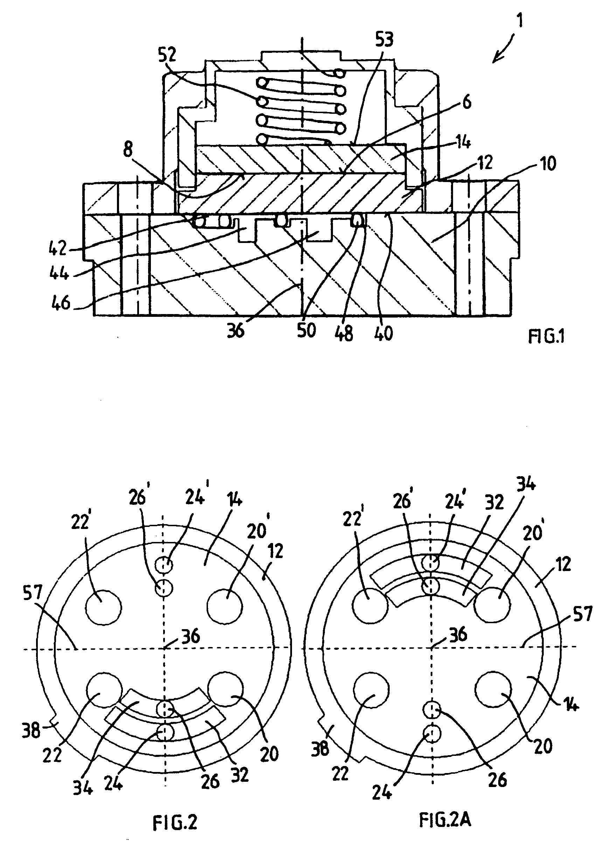

In Fig.1 ist eine Schnittdarstellung eines Niveauregelventils 1 einer Luftfederungseinrichtung eines luftgefederten Nutzfahrzeugs gemäß einer bevorzugten Ausführungsform der Erfindung gezeigt. Bei dem Nutzfahrzeug kann es sich um eine einzelnes Fahrzeug wie eine Zugmaschine oder einen Anhänger wie einen Deichselanhänger oder einen Auflieger handeln.

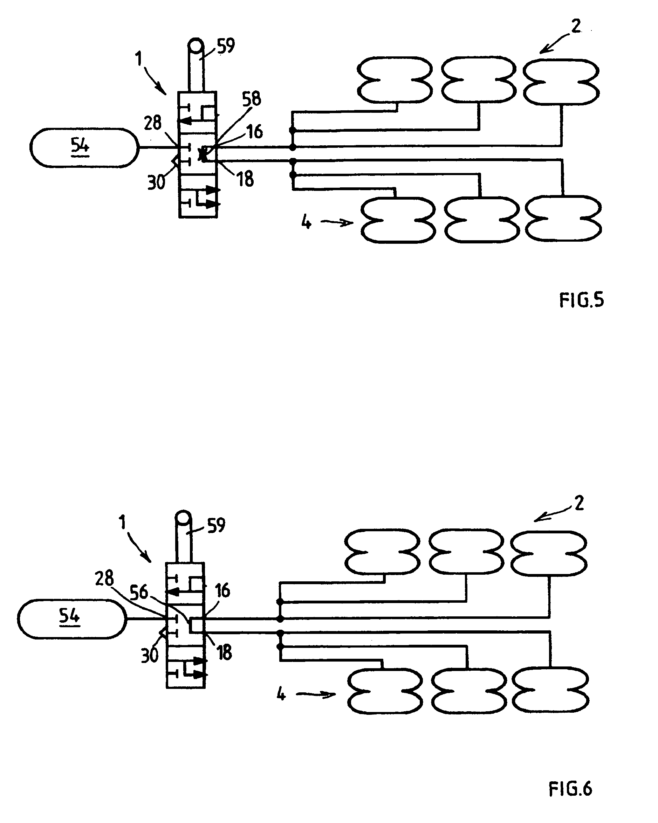

Das Niveauregelventil 1 dient zum Halten des Fahrzeugaufbaus 3 auf konstantem Niveau durch Be- bzw. Entlüften von Luftfederbälgen abhängig von der detektierten Niveaulage des Fahrzeugsaufbaus, welche unter anderem von der Beladung abhängt. In Fig.5 sind exemplarisch drei Luftfederbälge 2, 4 je Fahrzeugseite, rechts und links gezeigt.

Das Niveauregelventil 1 weist wenigstens zwei sich entlang von Kontaktflächen 6, 8 kontaktierende, in einem Ventilgehäuse 10 gelagerte, relativ zueinander bewegliche Ventilkörper 12, 14 auf, in welchen jeweils in die Kontaktflächen 6, 8 mündende Strömungswege ausgebildet sind, wobei der Überdeckungsgrad der Mündungen der Strömungswege der Ventilkörper 12, 14 abhängig von der Niveaulage des Fahrzeugaufbaus 3 ist.

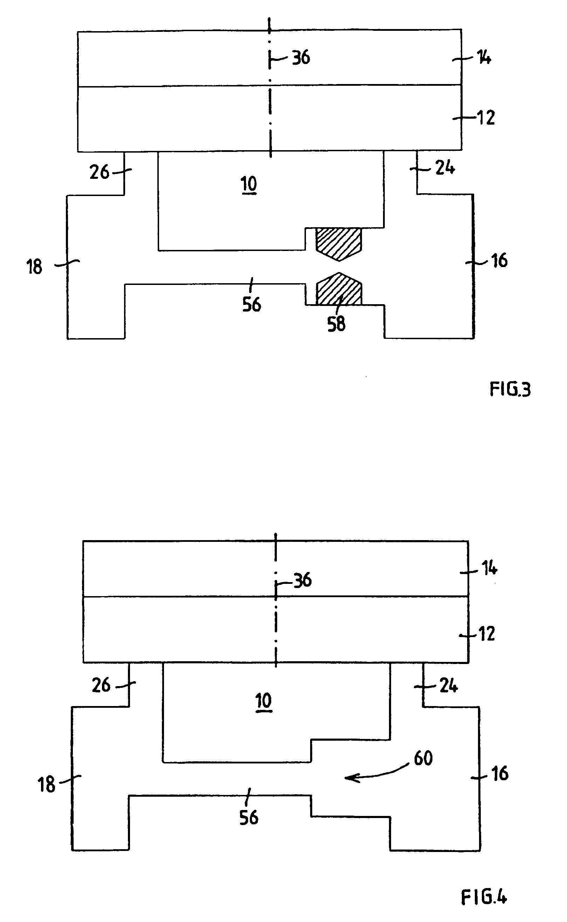

Weiterhin weist das Ventilgehäuse 10 des Niveauregelventils 1 einen Luftfederbalg-Anschluss 16 für die Luftfederbälge 2 der rechten Seite und einen weiteren Luftfederbalg-Anschluss 18 für die Luftfederbälge 4 der linken Seite des Fahrzeugs auf, wie aus Fig.3 und Fig.4 bzw. Fig. 5 und Fig.6 hervorgeht.

Besonders bevorzugt weist der eine Ventilkörper 12 als Strömungswege einen Belüftungskanal 20, einen Entlüftungskanal 22 sowie einen Strömungskanal 24 für die Luftfederbälge 2 der rechten Seite und einen Strömungskanal 26 für die Luftfederbälge 4 der linken Seite auf.

Der Belüftungskanal 20, der Entlüftungskanal 22 sowie die Strömungskanäle 24, 26 für die Luftfederbälge 2 der rechten Seite und für die Luftfederbälge 4 der linken Seite münden einerseits in die Kontaktfläche 6 des einen Ventilkörpers 12. Andererseits steht der Belüftungskanal 20 mit einem in der Ansicht von Fig.5 sichtbaren Druckluftreservoir-Anschluss 28 des Ventilgehäuses 10, der Entlüftungskanal 22 mit einer ebenfalls in Fig.5 sichtbaren Drucksenke 30 des Ventilgehäuses 10 und der Strömungskanal 24 für die Luftfederbälge 2 der rechten Seite mit dem einen Luftfederbalg-Anschluss 16 des Ventilgehäuses 10 und der Strömungskanal 26 für die Luftfederbälge 4 der linken Seite mit dem weiteren Luftfederbalg-Anschluss 18 des Ventilgehäuses 10 in Strömungsverbindung, wie Fig.3 und Fig.4 zeigt.

Besonders bevorzugt weist der andere Ventilkörper 14 an seiner zu dem einen Ventilkörper 12 weisenden Kontaktfläche 8 eine mit der Mündung des Strömungskanals 24 für die Luftfederbälge 2 der rechten Seite in Strömungsverbindung stehende Ausnehmung 32 sowie eine mit der Mündung des Strömungskanals 26 für die Luftfederbälge 4 der linken Seite in Strömungsverbindung stehende Ausnehmung 34 auf. Abhängig von der Niveaulage des Fahrzeugaufbaus 3 sind die sich entlang der Kontaktflächen 6, 8 kontaktierenden, in dem Ventilgehäuse 10 gelagerten Ventilkörper 12, 14 entlang der Kontaktflächen 6, 8 relativ zueinander beweglich, wobei dann der Überdeckungsgrad der Ausnehmungen 32, 34 des anderen Ventilkörpers 14 mit der Mündung des Belüftungskanals 20 oder mit der Mündung des Entlüftungskanals 22 des einen Ventilkörpers 12 von der Niveaulage des Fahrzeugaufbaus 3 abhängt. Die Ausnehmungen 32, 34 des anderen Ventilkörpers 14 sind dabei vorzugsweise als parallel zur Kontaktfläche 8 verlaufende Nuten ausgebildet.

Besonders bevorzugt sind die Ventilkörper als einander kontaktierende Ventilscheiben 12, 14 kreisförmigen Querschnitts mit im wesentlichem identischem Durchmesser ausgebildet. In diesem Fall sind die Nuten 32, 34 der anderen Ventilscheibe 14 zweckmäßig als radial voneinander beabstandete, in Bezug zu einer zentralen Achse 36 konzentrische Kreisbögen ausgebildet. Um eine Überdeckung zu gewährleisten, sind die Strömungskanäle 24 und 26 bzw. deren Mündungen in der Kontaktfläche 6 mit entsprechendem radialem Abstand in der einen Ventilscheibe 12 ausgebildet.

Beispielsweise ist die andere Ventilscheibe 14 abhängig von der Niveaulage des Fahrzeugaufbaus 3 relativ zu der einen, im Ventilgehäuse 10 drehfest gelagerten Ventilscheibe 12 um die zentrale Achse 36 drehbar. Die andere Ventilscheibe 14 wird dabei bevorzugt durch einen in Fig.5 und Fig.6 gezeigten Hebel 59 drehgetrieben, welcher wiederum vom Fahrzeugaufbau 3 betätigt wird. Weiterhin ist die eine, in dem Ventilgehäuse 10 drehfest gelagerte Ventilscheibe 12 in Bezug zur zentralen Achse 36 im Ventilgehäuse 10 axial beweglich gelagert sein. Die drehfeste Lagerung der einen Ventilscheibe 12 ist beispielsweise durch eine randseitig vorspringende Nase 38 bewerkstelligt, welche in eine komplementär geformte, hier nicht gezeigte Ausnehmung im Ventilgehäuse 10 radial eingreift (Fig.2). Die axiale Beweglichkeit der einen Ventilscheibe 12 kann dadurch realisiert sein, dass sie ähnlich wie bei einem Zylinder-Kolbentrieb innerhalb einer zylindrischen Aufnahmebohrung im Ventilgehäuse 10 gelagert ist.

Weiterhin begrenzt die eine, in dem Ventilgehäuse 10 drehfest gelagerte und in Bezug zur zentralen Achse 36 im Ventilgehäuse 10 axial beweglich gelagerte Ventilscheibe 12 mit ihrer von der anderen Ventilscheibe 14 weg weisenden Seitenfläche 40 im Ventilgehäuse 10 ausgebildete und unter Druck stehende, voneinander getrennte und gegeneinander abgedichtete Kammern 42, 44, 46, wie insbesondere Fig.1 zeigt. Dabei steht eine Kammer 42 mit dem Druckluftreservoir-Anschluss 28, eine Kammer 44 mit dem einen Luftfederbalg-Anschluss 16 und eine weitere Kammer 46 mit dem weiteren Luftfederbalg-Anschluss 18 des Ventilgehäuses 10 in Strömungsverbindung. Diese Kammern 42, 44, 46 sind dann mittels wenigstens axial elastischer, sich einerseits an der einen Ventilscheibe 12 und andererseits in Nuten 48 im Ventilgehäuse 10 abstützenden Dichtungen 50 gegeneinander abgedichtet.

Da insbesondere der Druckluftreservoir-Anschluss 28 und auch die Luftfederbalg-Anschlüsse 16, 18 wegen des auf den Luftfederbälgen 2, 4 lastenden Eigengewichts des Fahrzeugs in der Regel einen gegenüber der Atmosphäre höheren Druck aufweisen, ist in den Kammern 42, 44, 46 stets ein Druck vorhanden, welcher die eine Ventilscheibe 12 gegen die andere Ventilscheibe 14 presst, um die Dichtigkeit der Strömungsübergange zwischen den Strömungskanälen 20, 22, 24, 26 und den Nuten 32, 34 senkrecht zu den Kontaktflächen 6, 8 zu gewährleisten. Zudem stützt sich eine Druckfeder 52 auf der von der einen Ventilscheibe 12 weg weisenden Seitenfläche 53 der anderen Ventilscheibe 14 ab, um eine zusätzliche Druckkraft zu erzeugen, die die Pressung in den Kontaktflächen 6, 8 erhöht bzw. alleinig erzeugt, wenn in dem Druckluftreservoir-Anschluss 28 und auch in den Luftfederbalg-Anschlüssen 16, 18 und damit in den Kammern 42, 44, 46 kein Druck ansteht, was bei entleertem Druckluftreservoir 54 und entleerten Luftfederbälgen 2, 4 der Fall sein kann, beispielsweise nach einer längeren Abstellzeit eines Anhängers. Hierzu ist die andere Ventilscheibe zusätzlich zu ihrer Drehbarkeit um die zentrale Achse 36 auch axial verschieblich in der Aufnahmebohrung des Ventilgehäuses 10 gelagert. Folglich sind die beiden Ventilscheiben 12, 14 einerseits durch die Druckfeder 52 belastet, andererseits am Ventilgehäuse 10 abgestützt bzw. durch den Druck in den Kammern 42, 44, 46 gegensinnig belastet, wodurch diese zusammengepresst werden.

Wie aus Fig.2 in Verbindung mit Fig.2A hervorgeht, ist in der einen Ventilscheibe 12 in Bezug zu einer eine Symmetrieachse 57 des kreisförmigen Querschnitts bildenden Achse symmetrisch zu dem Belüftungskanal 20, dem Entlüftungskanal 22 sowie den Strömungskanälen 24, 26 ein weiterer Belüftungskanal 20', ein weiterer Entlüftungskanal 22' sowie ein weiterer Strömungskanal 24' für die Luftfederbälge 2 der rechten Seite und ein weiterer Strömungskanal 26' für die Luftfederbälge 4 der linken Seite ausgebildet. Damit kann die andere Ventilscheibe 14 in Bezug zu der einen Ventilscheibe 12 auch in einer um 180 Grad verdrehten Lage in das Ventilgehäuse 10 eingebaut werden. Wenn beispielsweise die andere Ventilscheibe 14 mittels des Hebels 59 mit dem Fahrzeugaufbau 3 in Verbindung steht und abhängig von der Niveaulage oder der Last des Fahrzeugsaufbaus gegenüber der einen Ventilscheibe 12 verdreht wird, ergibt sich dadurch eine höhere Flexibilität bezüglich der Einbaulage des Niveauregelventils 1.

Wie am besten aus Fig.3 und Fig.4 hervorgeht, weist das Ventilgehäuse 10 des Niveauregelventils 1 einen Verbindungskanal 56 zwischen den beiden Luftfederbalg-Anschlüssen 16, 18 auf, in welchem wahlweise wenigstens ein Einsatzkörper in Form einer den Strömungsquerschnitt zwischen dem einen Luftfederbalg-Anschluss 16 und dem weiteren Luftfederbalg-Anschluss 18 verengenden Drossel 58 oder in Form eines hier nicht gezeigten Sperrelements zum Sperren des Strömungsquerschnitts des Verbindungskanals 56 lösbar befestigt ist.

Wie Fig.5 und Fig.6 zeigen, ist das Niveauregelventil 1 bevorzugt als 4/3-Wegeventil ausgebildet. In der Belüftungsstellung des Niveauregelventils 1 werden beide Luftfederbalg-Anschlüsse 16, 18 parallel oder zeitgleich belüftet und in der Entlüftungsstellung gleichzeitig oder parallel entlüftet. Wie eingangs bereits erwähnt, wird das Niveauregelventil 1 bevorzugt durch einen in Fig.5 und Fig.6 gezeigten Hebel 59 betätigt, abhängig von der jeweiligen Niveaulage des Fahrzeugsaufbaus. In der in Fig. 5 und Fig.6 gezeigten Neutralstellung des Niveauregelventils 1, d.h. wenn keine Be- oder Entlüftung der Luftfederbälge 2, 4 stattfindet, stehen dann die Luftfederbälge 2, 4 der rechten und der linker Fahrzeugseite über den Verbindungskanal 56 im Ventilgehäuse 10 des Niveauregelventils 1 miteinander in Strömungsverbindung.

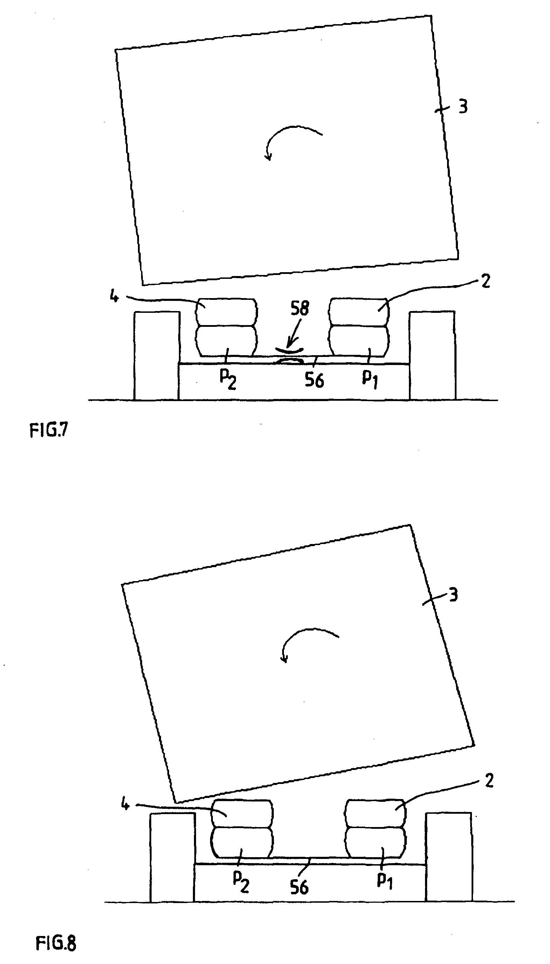

Falls eine Drossel 58 in dem Verbindungskanal 56 angeordnet wird (Fig.3 und Fig.5), können Wankbewegungen des Fahrzeugaufbaus 3 ausgeglichen werden, indem die Drossel 58 eine Druckluftströmung von den Luftfederbälgen 4 der höher belasteten Kurvenaußenseite zu den Luftfederbälgen 2 der niedriger belasteten Kurveninnenseite nur eingeschränkt zulässt, wie durch Fig.7 veranschaulicht wird. Dadurch bleibt der Druck und damit die Federrate in den Luftfederbälgen 4 der Kurvenaußenseite wenigstens für eine gewisse Zeitdauer hoch, was zu einer niedrigeren Einfederung an der Kurvenaußenseite und letztlich zu einer geringeren Wankbewegung des Fahrzeugaufbaus 3 führt.

Auf diese Weise wird ein quasi-zweikreisiges System verwirklicht, bei welchem der Kreis der Luftfederbälge 2 der rechten Fahrzeugseite und der Kreis der Luftfederbälge 4 der linken Fahrzeugseite voneinander quasi entkoppelt sind. Diese Situation ist in Fig.5 und Fig.7 schematisch dargestellt. Der Druck p₂ in den kurvenäußeren Luftfederbälgen 4 ist dann während eines gewissen Zeitraums größer als der Druck p₁ in den kurveninneren Luftfederbälgen 2, weil der Druckausgleich durch die Drossel 58 behindert und die kurvenäußeren Räder höher belastet sind.

Falls in dem Verbindungskanal 56 ein hier nicht gezeigtes Sperrelement zum Sperren der Strömung zwischen dem einen Luftfederbalg-Anschluss 16 und dem weiteren Luftfederbalg-Anschluss 18 lösbar montiert wird, können die Luftfederbälge 2, 4 der rechten Fahrzeugseite und der linken Fahrzeugseite über die beiden nun strömungstechnisch völlig getrennten Luftfederbalg-Anschlüsse 16, 18 unabhängig voneinander be- bzw. entlüftet werden. Zur lösbaren Befestigung eines Einsatzkörpers 58 ist in dem Verbindungskanal 56 eine entsprechende Aufnahme 60 vorgesehen.

Nicht zuletzt kann auch auf einen Einsatzkörper 58 im Verbindungskanal 56 völlig verzichtet werden, d.h. es wird kein Einsatzkörper 58 in den Verbindungskanal 56 eingesetzt, so dass eine ungehinderte Strömung zwischen den Luftfederbälgen 2, 4 der rechten Fahrzeugseite und der linken Fahrzeugseite möglich ist. Diese Situation zeigt Fig.4, Fig.6 und Fig.8. In diesem Fall ist wegen des ungehinderten Druckausgleichs der Druck p₂ in den Luftfederbälgen 4 der kurvenäußeren Luftfederbälge ungefähr gleich dem Druck p₁ in den kurveninneren Luftfederbälgen 2.

### Bezugszeichenliste

- 1: Niveauregelventil
- 2: Luftfederbälge rechts
- 3: Fahrzeugaufbau
- 4: Luftfederbälge links
- 6: Kontaktfläche
- 8: Kontaktfläche
- 10: Ventilgehäuse
- 12: Ventilscheibe
- 14: Ventilscheibe
- 16: Luftfederblag-Anschluss
- 18: Luftfederbalg-Anschluss
- 20: Belüftungskanal
- 22: Entlüftungskanal
- 24: Strömungskanal
- 26: Strömungskanal
- 28: Druckluftreservoir-Anschluss
- 30: Drucksenke
- 32: Nut
- 34: Nut
- 36: Achse
- 38: Nase
- 40: Seitenfläche
- 42: Kammer
- 44: Kammer
- 46: Kammer
- 48: Nuten
- 50: Dichtungen
- 52: Druckfeder
- 53: Seitenfläche
- 54: Druckluftreservoir
- 56: Verbindungskanal
- 57: Symmetrieachse
- 58: Drossel
- 59: Hebel
- 60: Aufnahme

## Patentansprüche

1. Niveauregelventil (1) für eine Luftfederungseinrichtung zur Niveauregelung des Fahrzeugaufbaus (3) von luftgefederten Fahrzeugen durch Luftversorgung wenigstens eines Luftfederbalgs (2, 4) abhängig von der Niveaulage des Fahrzeugsaufbaus (3), welches wenigstens zwei sich entlang von Kontaktflächen (6, 8) kontaktierende, in einem Ventilgehäuse (10) gelagerte und entlang der Kontaktflächen (6, 8) relativ zueinander bewegliche Ventilkörper (12, 14) aufweist, in welchen jeweils in die Kontaktflächen (6, 8) mündende Strömungswege (20, 22, 24, 26, 32, 34) ausgebildet sind, wobei die Position der Ventilkörper (12, 14) relativ zueinander und der Überdeckungsgrad der Mündungen der Strömungswege (20, 22, 24, 26, 32, 34) der Ventilkörper (12, 14) abhängig von der Niveaulage des Fahrzeugaufbaus (3) ist und wenigstens einer der Strömungswege (24, 26) mit einem Luftfederbalg-Anschluss (16, 18) für wenigstens einen Luftfederbalg (2, 4) in Strömungsverbindung steht, **dadurch gekennzeichnet, dass** das Ventilgehäuse (10) wenigstens einen Luftfederbalg-Anschluss (16) für wenigstens einen Luftfederbalg (2) der rechten Seite und wenigstens einen weiteren Luftfederbalg-Anschluss (18) für wenigstens einen Luftfederbalg (4) der linken Seite des Fahrzeugs sowie einen Verbindungskanal (56) zwischen den beiden Luftfederbalg-Anschlüssen (16, 18) aufweist, in welchem wahlweise wenigstens ein Einsatzkörper in Form einer den Strömungsquerschnitt zwischen dem einen Luftfederbalg-Anschluss (16) und dem weiteren Luftfederbalg-Anschluss (18) verengenden Drossel (58) oder in Form eines Sperrelements zum Sperren des Strömungsquerschnitts lösbar befestigt ist.

2. Niveauregelventil nach Anspruch 1, **dadurch gekennzeichnet, dass** in wenigstens einem der Ventilkörper (12) wenigstens ein dem einen Luftfederbalg-Anschluss (16) zugeordneter Strömungsweg (24) und wenigstens ein dem weiteren Luftfederbalg-Anschluss (18) zugeordneter Strömungsweg (26) ausgebildet ist.

3. Niveauregelventil nach Anspruch 2, **dadurch gekennzeichnet, dass** der eine Ventilkörper (12) als Strömungswege wenigstens
a) einen Belüftungskanal (20), einen Entlüftungskanal (22) sowie einen Strömungskanal (24) für den wenigstens einen Luftfederbalg (2) der rechten Seite und einen Strömungskanal (26) für den wenigstens einen Luftfederbalg (4) der linken Seite aufweist, wobei
b) der Belüftungskanal (20), der Entlüftungskanal (22) sowie die Strömungskanäle (24, 26) für den wenigstens einen Luftfederbalg (2) der rechten Seite und für den wenigstens einen Luftfederbalg (4) der linken Seite einerseits in die Kontaktfläche (6) des einen Ventilkörpers (12) münden und andererseits
c) der Belüftungskanal (20) mit einem Druckluftreservoir-Anschluss (28) des Ventilgehäuses (10), der Entlüftungskanal (22) mit einer Drucksenke (30) des Ventilgehäuses (10) und der Strömungskanal (24) für den wenigstens einen Luftfederbalg (2) der rechten Seite mit dem einen Luftfederbalg-Anschluss (16) des Ventilgehäuses (10) und der Strömungskanal (26) für den wenigstens einen Luftfederbalg (4) der linken Seite mit dem weiteren Luftfederbalg-Anschluss (18) des Ventilgehäuses (10) in Strömungsverbindung steht.

4. Niveauregelventil nach Anspruch 3, **dadurch gekennzeichnet, dass** der andere Ventilkörper (14) an seiner zu dem einen Ventilkörper (12) weisenden Kontaktfläche (8) wenigstens eine mit der Mündung des Strömungskanals (24) für den wenigstens einen Luftfederbalg (2) der rechten Seite in Strömungsverbindung stehende Ausnehmung (32) sowie wenigstens eine mit der Mündung des Strömungskanals (26) für den wenigstens einen Luftfederbalg (4) der linken Seite in Strömungsverbindung stehende Ausnehmung (34) aufweist, wobei der Überdeckungsgrad dieser Ausnehmungen (32, 34) mit der Mündung des Belüftungskanal (20) oder mit der Mündung des Entlüftungskanals (22) des einen Ventilkörpers (12) von der Niveaulage des Fahrzeugaufbaus (3) abhängt.

5. Niveauregelventil nach Anspruch 4, **dadurch gekennzeichnet, dass** die Ausnehmungen (32, 34) des anderen Ventilkörpers (14) als parallel zur Kontaktfläche (8) verlaufende Nuten ausgebildet sind.

6. Niveauregelventil nach Anspruch 5, **dadurch gekennzeichnet, dass** die Ventilkörper (12, 14) als einander kontaktierende Ventilscheiben kreisförmigen Querschnitts mit im wesentlichem identischen Durchmesser in Bezug zu einer zentralen Achse (36) ausgebildet sind.

7. Niveauregelventil nach Anspruch 5 und 6, **dadurch gekennzeichnet, dass** die Nuten (32, 34) des anderen Ventilkörpers als radial voneinander beabstandete, in Bezug zur zentralen Achse (36) konzentrische Kreisbögen ausgebildet sind.

8. Niveauregelventil nach Anspruch 7, **dadurch gekennzeichnet, dass** die andere Ventilscheibe (14) abhängig von der Niveaulage des Fahrzeugaufbaus (3) relativ zu der einen, im Ventilgehäuse (10) drehfest gelagerten Ventilscheibe (12) um die zentrale Achse (36) drehbar ist.

9. Niveauregelventil nach Anspruch 8, **dadurch gekennzeichnet, dass** die eine, in dem Ventilgehäuse (10) drehfest gelagerte Ventilscheibe (12) in Bezug zur zentralen Achse (36) im Ventilgehäuse (10) axial beweglich gelagert ist.

10. Niveauregelventil nach Anspruch 9, **dadurch gekennzeichnet, dass** die eine, in dem Ventilgehäuse (10) drehfest gelagerte und in Bezug zur zentralen Achse (36) im Ventilgehäuse (10) axial beweglich gelagerte Ventilscheibe (12) wenigstens eine im Ventilgehäuse (10) ausgebildete Kammer (42, 44, 46) begrenzt.

11. Niveauregelventil nach Anspruch 10, **dadurch gekennzeichnet, dass** mehrere Kammern (42, 44, 46) vorgesehen sind, von welchen eine Kammer (42) mit dem Druckluftreservoir-Anschluss (28), eine Kammer (44) mit dem einen Luftfederbalg-Anschluss (16) und eine weitere Kammer (46) mit dem weiteren Luftfederbalg-Anschluss (18) des Ventilgehäuses (10) in Strömungsverbindung steht.

12. Niveauregelventil nach Anspruch 11, **dadurch gekennzeichnet, dass** die Kammern (42, 44, 46) mittels axial elastischer, sich einerseits an der einen Ventilscheibe (12) und andererseits am Ventilgehäuse (10) abstützenden Dichtungen (50) gegeneinander abgedichtet sind.

13. Niveauregelventil nach den Ansprüchen 3 bis 12, **dadurch gekennzeichnet, dass** in dem einen Ventilkörper (12) jeweils achsensymmetrisch ein weiterer Belüftungskanal (20'), ein weiterer Entlüftungskanal (22') sowie ein weiterer Strömungskanal (24') für den wenigstens einen Luftfederbalg (2) der rechten Seite und ein weiterer Strömungskanal (26') für den wenigstens einen Luftfederbalg (4) der linken Seite derart ausgebildet ist, dass in einer um 180 Grad um die zentrale Achse (36) verschwenkten Lage des anderen Ventilkörpers (14) in Bezug zu dem einen Ventilkörper (12) die eine Ausnehmung (32) des anderen Ventilkörpers (14) mit der Mündung des Strömungskanals (24') für den wenigstens einen Luftfederbalg (2) der rechten Seite sowie die weitere Ausnehmung (34) mit der Mündung des weiteren Strömungskanals (26') für den wenigstens einen Luftfederbalg (4) der linken Seite in Strömungsverbindung steht und der Überdeckungsgrad dieser Ausnehmungen (32, 34) mit der Mündung des Belüftungskanals (20') oder mit der Mündung des Entlüftungskanals (22') des einen Ventilkörpers (12) von der Niveaulage des Fahrzeugaufbaus (3) abhängt.

14. Luftfederungseinrichtung zum Heben und Senken des Fahrzeugaufbaus von luftgefederten Fahrzeugen mit Niveauregelung beinhaltend wenigstens ein Niveauregelventil (1) nach einem der vorhergehenden Ansprüche.

## Claims

1. Level control valve (1) for a pneumatic suspension system for controlling the level of the bodywork (3) of pneumatically suspended vehicles by air supply to at least one pneumatic suspension bellows (2, 4) as a function of the level position of said vehicle bodywork (3), comprising at least two valve bodies (12, 14) contacting each other along contact surfaces (6, 8), supported inside a valve housing (10) and movable along said contact surfaces relative to each other, in which valve bodies respective flow paths (20, 22, 24, 26, 32, 34) are formed that open into said contact surfaces (6, 8), with the position of said valve bodies (12, 14) relative to each other and with the degree of registering of the opening of said flow paths (20, 22, 24, 26, 32, 34) of said valve bodies (12, 14) being dependent on the level position of said vehicle bodywork (3) and with at least one of said flow paths (24, 26) being in flow communication with a pneumatic suspension connector (16, 18) for at least one pneumatic suspension bellows (2, 4), **characterised in that** said valve housing (10) comprises at least one pneumatic suspension bellows connector (16) for at least one pneumatic suspension bellows (2) of the right side and at least one further pneumatic suspension bellows connector (18) for at least one pneumatic suspension bellows (4) of the left side as well as a connecting passage (56) between said two pneumatic suspension bellows connectors (16, 18), in which optionally at least one insert body is detachably fastened in the form of a throttle (58), which narrows the cross-sectional flow area between said first pneumatic suspension bellows connector (16) and said further pneumatic suspension bellows connector (18), or in the form of a blocking element for blocking the cross-sectional flow area.

2. Level control valve according to Claim 1, **characterised in that** at least one flow path (24) associated with said first pneumatic suspension bellows connector (16) and at least one flow path (26) are formed in at least one of said valve bodies (12), which is associated with said further pneumatic suspension bellows connector (18).

3. Level control valve according to Claim 2, **characterised in that** said first valve body (12) comprises as flow paths at least
(a) one aeration duct (20), one venting duct (22) as well as one flow passage (24) for said at least one pneumatic suspension bellows (2) on the right side and one flow passage (26) for said at least one pneumatic suspension bellows (4) on the left side,
(b) wherein said aeration duct (20), said venting duct (22) as well as said flow passages (24, 26) for said at least one pneumatic suspension bellows (2) of the right side and for said at least one pneumatic suspension bellows of the left side (4) open, on the one hand, into said contact surface (6) of said first valve body (12), and, on the other hand,
(c) said aeration duct (20) is in flow communication with a compressed-air reservoir connector (28) of said valve housing (10), said venting duct (22) is in flow communication with a pressure drain (30) of said valve housing (10), and said flow passage (24) for said at least one pneumatic suspension bellows (2) of the right side is in flow communication with said first pneumatic suspension bellows connector (16) of said valve housing (10) and said flow passage (26) for said at least one pneumatic suspension bellows (4) of the left side is in flow communication with said further pneumatic suspension bellows connector (18) of said valve housing (10).

4. Level control valve according to Claim 3, **characterised in that** said other valve body (14) comprises, on its contact surface (8) facing said first valve body (12), at least one recess (32) in flow communication with the opening of said flow passage (24) for said at least one pneumatic suspension bellows (2) of the right side, as well as at least one recess (34) in flow communication with the opening of said flow passage (26) for said at least one pneumatic suspension bellows (4) of the left side, wherein the degree of registering of said recesses (32, 34) with the opening of said aeration duct (20) or with the opening of said venting duct (22) of said first valve body (12) depends on the level position of said vehicle bodywork (3).

5. Level control valve according to Claim 4, **characterised in that** said recesses (32, 34) of said other valve body are designed as grooves extending in parallel with said contact surface (8).

6. Level control valve according to Claim 5, **characterised in that** said valve bodies (12, 14) are designed as valve discs contacting each other, which have a circular cross-section with a substantially identical diameter relative to a central axis (36).

7. Level control valve according to the Claims 5 and 6, **characterised in that** said grooves (32, 34) of said other valve body are designed as arcs of a circle which are radially spaced from each other and concentric relative to said central axis (36).

8. Level control valve according to Claim 7, **characterised in that** the other valve disc (14) is rotatable about said central axis (36) as a function of the level position of said vehicle bodywork (3) relative to said first valve disc (12) non-rotatably supported in said valve housing (10).

9. Level control valve according to Claim 8, **characterised in that** said first valve disc (12) non-rotatably supported in said valve housing (10) is supported for axial mobility relative to said central axis (36) in said valve housing (10).

10. Level control valve according to Claim 9, **characterised in that** said first valve disc (12) non-rotatably supported in said valve housing (10) and supported for axial mobility relative to said central axis (36) in said valve housing (10) defines at least one chamber (42, 44, 46) formed in said valve housing (10).

11. Level control valve according to Claim 10, **characterised in that** a plurality of chambers (42, 44, 46) is provided, whereof one chamber (42) is in flow communication with said compressed-air reservoir (28), one chamber (44) is in flow communication with said first pneumatic suspension bellows connector (16) and another chamber (46) is in flow communication with said further pneumatic suspension bellows connector (18) of said valve housing (10).

12. Level control valve according to Claim 11, **characterised in that** said chambers (42, 44, 46) are sealed from one another by means of axially resilient seals (50) supported, on the one hand, on said first valve body (12) and, on the other hand, on said valve housing (10).

13. Level control valve according to any of the Claims 3 to 12, **characterised in that** a further aeration duct (20'), a further venting duct (22') as well as a further flow passage (24') for said at least one pneumatic suspension bellows (2) of the right side and a further flow passage (26') for said at least one pneumatic suspension bellows (4) of the left side are formed each in axial symmetry in said first valve body (12) in such a way that in a position of said other valve body (14), which is pivoted through 180 degrees about said central axis (36) relative to said first valve body (12), said first recess (32) of said other valve body (14) is in flow communication with the opening of said flow passage (24') for said at least one pneumatic suspension bellows (2) of the right side and said further recess (34) is in flow communication with the opening of said further flow passage (26') for said at least one pneumatic suspension bellows (4) of the left side, and the degree of registering of these recesses (32, 34) with the opening of said aeration duct (20') or with the opening of said venting duct (22') of said first valve body (12) depends on the level position of said vehicle bodywork (3).

14. Pneumatic suspension system for raising and lowering the vehicle bodywork of pneumatically suspended vehicles with a level control system, comprising at least one level control valve (1) according to any of the preceding claims.

## Revendications

1. Correcteur d'assiette (1) pour un dispositif de suspension pneumatique de correction d'assiette de la carrosserie (3) de véhicules à suspension pneumatique, par alimentation en air d'au moins un soufflet (2, 4) à air en fonction de la position en niveau de la carrosserie (3) du véhicule, qui a au moins deux pièces (12, 14) du correcteur d'assiette entrant en contact le long de surfaces (6, 8) de contact, montées dans un obturateur (10) du correcteur d'assiette et mobiles l'une par rapport à l'autre le long des surfaces (6, 8) de contact, pièces dans lesquelles des trajets (20, 22, 24, 26, 32, 34) d'écoulement débouchant respectivement dans les surfaces (6, 8) de contact sont formés, la position des pièces (12, 14) du correcteur d'assiette l'une par rapport à l'autre et le degré de recouvrement des embouchures des trajets (20, 22, 24, 26, 32, 34) d'écoulement des pièces (12, 14) du correcteur d'assiette dépendant de la position en niveau de la carrosserie (3) du véhicule et au moins l'un des trajets (24, 26) d'écoulement étant en communication avec un raccord (16, 18) pour au moins un soufflet (2, 4) à air, **caractérisé en ce que** l'obturateur (10) du correcteur d'assiette a au moins un raccord (16) de soufflet à air pour au moins un soufflet (2) à air du côté droit et au moins un autre raccord (18) de soufflet à air pour au moins un soufflet (4) à air du côté gauche du véhicule, ainsi qu'un canal (56) de liaison entre les deux raccords (16, 18) de soufflet à air, dans lequel est fixée de manière amovible au choix au moins une pièce rapportée sous la forme d'un étranglement (58) rétrécissant la section transversale d'écoulement entre l'un des raccords (16) de soufflet à air et l'autre raccord (18) de soufflet à air ou sous la forme d'un élément d'obturation pour obturer la section transversale d'écoulement.

2. Correcteur d'assiette suivant la revendication 1, **caractérisé en ce qu'**il est formé, dans au moins l'une des pièces (12) du correcteur d'assiette, au moins un trajet (24) d'écoulement associé au raccord (16) de soufflet à air et au moins un trajet (26) d'écoulement associé à l'autre raccord (18) de soufflet à air.

3. Correcteur d'assiette suivant la revendication 2, **caractérisé en ce que** la une pièce (12) du correcteur d'assiette a comme trajet d'écoulement au moins
a) un canal (20) d'alimentation en air, un canal (22) d'évacuation de l'air, ainsi qu'un canal (24) d'écoulement pour le au moins un soufflet (2) à air du côté droit et un canal (26) d'écoulement pour le au moins un soufflet (4) à air du côté gauche, dans lequel
b) le canal (20) d'alimentation en air, le canal (22) d'évacuation de l'air ainsi que les canaux (24, 26) d'écoulement pour le au moins un soufflet (2) à air du côté droit et pour le au moins un soufflet (4) à air du côté gauche débouchent d'une part dans la surface (6) de contact de la une pièce (12) du correcteur d'assiette et d'autre part
c) le canal (20) d'alimentation en air est en communication fluidique avec un raccord (28) de réservoir d'air comprimé de l'obturateur (10) du correcteur d'assiette, le canal (22) d'évacuation de l'air avec un puits (30) de pression de l'obturateur (10) du correcteur d'assiette et le canal (24) d'écoulement pour le au moins un soufflet (2) à air du côté droit avec l'un des raccords (16) de soufflet à air de l'obturateur (10) du correcteur d'assiette et le canal (26) d'écoulement pour le au moins un soufflet (4) à air du côté gauche avec l'autre raccord (18) de soufflet à air de l'obturateur (10) du correcteur d'assiette.

4. Correcteur d'assiette suivant la revendication 3, **caractérisé en ce que** l'autre pièce (14) du correcteur d'assiette a sur sa surface (8) de contact, tournée vers la une pièce (12) du correcteur d'assiette, au moins un évidement (32) en liaison fluidique avec l'embouchure du canal (24) d'écoulement pour le au moins un soufflet à air du côté gauche, ainsi qu'au moins un évidement (34) en liaison fluidique avec l'embouchure du canal (26) d'écoulement pour le au moins un soufflet (4) à air du côté gauche, le degré de recouvrement de ces évidements (32, 34) avec l'embouchure du canal (24) d'alimentation en air ou avec l'embouchure du canal (22) d'évacuation de l'air de la une pièce (12) du correcteur d'assiette dépendant de la position en niveau de la carrosserie (3) du véhicule.

5. Correcteur d'assiette suivant la revendication 4, **caractérisé en ce que** les évidements (32, 34) de l'autre pièce (14) du correcteur d'assiette sont constitués sous la forme de rainures s'étendant parallèlement à la surface (8) de contact.

6. Correcteur d'assiette suivant la revendication 5, **caractérisé en ce que** les pièces (12, 14) du correcteur d'assiette sont constituées sous la forme de disques du correcteur d'assiette, en contact l'un avec l'autre, de section transversale circulaire, en ayant un diamètre sensiblement identique par rapport à un axe (36) central.

7. Correcteur d'assiette suivant la revendication 5 et 6, **caractérisé en ce que** les rainures (32, 34) de l'autre pièce du correcteur d'assiette sont constituées sous la forme d'arcs de cercle concentriques à l'axe (36) central et à distance radialement l'un de l'autre.

8. Correcteur d'assiette suivant la revendication 7, **caractérisé en ce que** l'autre disque (14) du correcteur d'assiette peut tourner autour de l'axe (36) central en fonction de la position en niveau de la carrosserie (3) du véhicule par rapport au un disque (12) du correcteur d'assiette monté fixe en rotation dans l'obturateur (10) du correcteur d'assiette.

9. Correcteur d'assiette suivant la revendication 8, **caractérisé en ce que** le un disque (12) du correcteur d'assiette, monté fixe en rotation dans l'obturateur (10) du correcteur d'assiette, est monté mobile axialement par rapport à l'axe (36) central dans l'obturateur (10) du correcteur d'assiette.

10. Correcteur d'assiette suivant la revendication 9, **caractérisé en ce que** le un disque (12) du correcteur d'assiette, monté fixe en rotation dans l'obturateur (10) du correcteur d'assiette et monté mobile axialement par rapport à l'axe (36) central dans l'obturateur (10) du correcteur d'assiette, délimite au moins une chambre (42, 44, 46) constituée dans l'obturateur (10) du correcteur d'assiette.

11. Correcteur d'assiette suivant la revendication 10, **caractérisé en ce qu'**il est prévu plusieurs chambres (42, 44, 46), dont l'une (42) est en communication fluidique avec le raccord (28) de réservoir d'air comprimé, une autre chambre (44) est en communication fluidique avec l'un des raccords (16) de soufflet à air et une autre chambre (46) est en communication fluidique avec l'autre raccord (18) de soufflet à air de l'obturateur (10) du correcteur d'assiette.

12. Correcteur d'assiette suivant la revendication 11, **caractérisé en ce que** les chambres (42, 44, 46) sont rendues étanches les unes par rapport aux autres au moyen de garnitures (50) d'étanchéité, élastiques axialement et s'appuyant d'une part sur le un disque (12) du correcteur d'assiette et d'autre part sur l'obturateur (10) du correcteur d'assiette.

13. Correcteur d'assiette suivant l'une des revendications 3 à 12, **caractérisé en ce que** dans l'une des pièces (12) du correcteur d'assiette est constitué respectivement, d'une manière symétrique par rapport à l'axe, un autre canal (20') d'alimentation en air, un autre canal (22') d'évacuation de l'air, ainsi qu'un autre canal (24') d'écoulement pour le au moins un soufflet (2) à air du côté droit et un autre canal (26') d'écoulement pour le au moins un soufflet (4) à air du côté gauche de manière à ce que, dans une position tournée autour de l'axe (36) central de 180 degrés de l'autre pièce (14) du correcteur d'assiette par rapport à l'une des pièces (12) du correcteur d'assiette, le un évidement (32) de l'autre pièce (14) du correcteur d'assiette soit en communication fluidique avec l'embouchure du canal (24') d'écoulement pour le au moins un soufflet (2) à air du côté droit, tandis que l'autre évidement (34) est en coopération fluidique avec l'embouchure de l'autre canal (26') d'écoulement pour le au moins un soufflet (4) à air du côté gauche et le degré de recouvrement de ces évidements (32, 34) avec l'embouchure du canal (20') d'alimentation en air ou avec l'embouchure du canal (22') d'évacuation de l'air de la une pièce (12) du correcteur d'assiette dépend de la position en niveau de la carrosserie (3) du véhicule.

14. Disposition pneumatique de suspension pour soulever et abaisser la carrosserie de véhicules à suspension pneumatique ayant une régulation de niveau comportant au moins un correcteur (1) d'assiette suivant l'une des revendications précédentes.
